# EUROPÄISCHE PATENTANMELDUNG

(11) **EP 1 385 109 A2**
(43) Veröffentlichungstag der Anmeldung: **28.01.2004**
(21) Anmeldenummer: 03012353.3
(22) Anmeldetag: 30.05.2003
(51) Int. Cl.: G06F 17/60

(54) **Verfahren und System zur Abwicklung von Bestellvorgängen**

(30) Priorität: 25.07.2002 DE 10234004
(71) Anmelder: MERCK PATENT GmbH, 64293 Darmstadt (DE)
(72) Erfinder: Brocke-Benz Manuel, West Chester, PA 19380-0906 (US)
(74) Vertreter: Weber, Dieter, Dr.

(57) **Zusammenfassung**

Die vorliegende Erfindung betrifft ein System zur Abwicklung von Bestellvorgängen mit einem Datenspeicher, einer Erfassungseinrichtung, die dafür vorgesehen ist, Bestelldaten von einem Besteller zu erfassen, einer Prozessoreinheit zur Ablage der erfaßten Bestelldaten in dem Datenspeicher. Des weiteren betrifft die vorliegende Erfindung ein Verfahren zur Abwicklung von Bestellvorgängen zwischen einem Anbieter und einem Besteller, das die Schritte des Erfassens von Bestelldaten, die aus einzelnen Datenfeldern bestehen, und Übermittlung von dem Besteller zu dem Anbieter, des Erzeugens einer Datei, die Datenfelder enthält, die zumindest einen Teil der Bestelldaten repräsentieren, und der Übermittlung der Datei zu dem Besteller aufweist. Um ein kostengünstiges Verfahren und ein System zur Abwicklung von Bestellvorgängen zwischen einem Anbieter und einem Besteller zur Verfügung zu stellen, welches einfach zu implementieren ist, und das sowohl im B2C-Bereich als auch im B2B-Bereich eingesetzt werden kann, wobei insbesondere im B2B-Bereich ein vereinfachter Datenaustausch möglich ist, durch den die manuelle Doppeleingabe der Bestelldaten vermieden werden kann, wird erfindungsgemäß vorgeschlagen, daß eine Einrichtung zur Erzeugung und Ausgabe einer Datei, die Datenfelder enthält, die zumindest einen Teil der Bestelldaten repräsentieren, und eine Übermittlungseinrichtung für die Übermittlung der Datei zu dem Besteller vorgesehen ist.

## Beschreibung

Die vorliegende Erfindung betrifft ein Verfahren und ein System zur Abwicklung von Geschäftstransaktionen insbesondere von Bestellvorgängen. Hierbei ist insbesondere an eine Automatisierung der Bestellvorgänge zwischen Untemehmen (B2B - Business to Business), aber auch zwischen einem Unternehmen und einem Konsumenten (B2C - Business to Consumer) gedacht.

Gerade im Untemehmensbereich kommen oftmals sehr komplexe Buchhaltungs- und Steuerungssysteme zum Einsatz, die auch ERP-Systeme genannt werden. Dabei versteht man unter Enterprise Resource Planning (ERP) ganz allgemein Softwarelösungen, die den betriebswirtschaftlichen Ablauf, beispielsweise in den Bereichen Logistik und Vertrieb, oftmals aber auch Finanzen und Personal, steuern und auswerten. Durch diese Systeme erfolgt eine übersichtliche und leicht handhabbare Verknüpfung der einzelnen Bereiche, so daß ERP-Systeme oftmals als unentbehrliche Steuerungsinstrumente zur Unterstützung von Unternehmensentscheidungen angesehen werden.

Solche Systeme funktionieren jedoch nur dann, wenn sichergestellt wird, daß alle Geschäftstransaktionen über das ERP-System abgewickelt werden, was zumindest die regelmäßige Eingabe beispielsweise aller Bestellvorgänge erfordert. Die manuelle Eingabe der Daten ist jedoch nicht nur sehr zeitintensiv, sondern darüber hinaus auch stete Quelle von Fehlern, welche die auf Basis der Daten getroffenen Entscheidungen in Frage stellen können.

Daher ist es gerade im B2B-Bereiche äußerst wünschenswert, die Geschäftstransaktionen derart zu gestalten, daß möglichst eine direkte Kommunikation bzw. ein direkter Datenaustausch zwischen den ERP-Systemen der beteiligten Geschäftspartner erfolgt.

Insbesondere im B2B-Umfeld gibt es bereits zahlreiche Lösungen, mit denen Geschäftstransaktionen automatisiert durchgeführt werden können. Bereits seit etlichen Jahren wird ein elektronischer Datenaustausch (EDI - "Electronic Data Interchange") zwischen Unternehmen verwendet. Mit EDI wurde bereits der standardisierte, bilaterale Austausch von Geschäftsinformationen, wie z.B. Bestellungen, über Netzwerke realisiert. Dabei werden zwischen den Untemehmen Dateien mit starr strukturierten Datenfeldern ausgetauscht. Dieser Austausch erfordert im allgemeinen sehr kostspielige proprietäre Netzwerke, die auch Value Added Networks (VAN) genannt werden. Daher wurde dieses Verfahren auch nur bei einigen wenigen größeren Unternehmen eingesetzt. Bereits mit EDI wurden die Geschäftsprozesse deutlich beschleunigt und darüber hinaus wurden die Anzahl der durch manuelle Bearbeitung der Geschäftsvorgänge häufig aufgetretenen Eingabefehler reduziert.

In neuerer Zeit wird EDI über das Internet mit Hilfe von sogenannten Virtual Private Networks (VPN) realisiert. Diese Netzwerke sind jedoch hinsichtlich ihrer Softwarearchitektur stark herstellerabhängig und zudem sehr teuer, so daß die Nutzungsmöglichkeiten sehr eingeschränkt sind.

Es gibt bereits B2B-Lösungen, mit denen Geschäftsbeziehungen zwischen Handelspartnern, die über den eigentlichen Bestell- und Kaufakt hinausgehen, abgewickelt werden können. Diese können von dem Zurverfügungstellen von Informationen, der Auswahl von Produkten über die Vereinbarung einer bestimmten Warenmenge, bis hin zu dem Preis sowie der Abwicklung der Zahlung reichen. Alle bekannten Arten der Geschäftsabwicklung im B2B-Bereich haben jedoch den Nachteil, daß auf beiden Seiten, das heißt auf Besteller- und auf Anbieterseite, ein entsprechend ineinander verzahntes System zur Verfügung gestellt werden muß. Dessen Entwicklung ist jedoch sehr zeit- und kostenaufwendig.

Die Abwicklung von Bestell- und Verkaufsvorgängen im Konsumentenmarkt (B2C) über das Internet ist hingegen meist unproblematisch. Dies liegt im wesentlichen daran, daß der Privatkonsument keine Buchhaltung führt, in der Bestellungen und Rechnungen verbucht und akzeptiert werden müssen. Auch ist im allgemeinen kein ERP-System vorhanden, welches nur Lieferungen akzeptieren kann, wenn zuvor die Aufträge entsprechend datentechnisch erfaßt wurden.

Selbstverständlich ist es prinzipiell möglich, das auf den Konsumenten abgestimmte System auch im B2B-Bereich zu verwenden. Dann muß der mit der Bestellung beauftragte Mitarbeiter über das Internet die entsprechende Bestellung tätigen und dabei die Waren, die Warenanzahl sowie den Warenpreis in die von dem Anbieter über das Internet angebotene Eingabemaske eintragen. Da jedoch im Geschäftsbereich der Besteller meist ein eigenes Buchhaltungssystem sowie ein eigenes ERP-System besitzt, muß der Besteller dann die einzelnen Daten nochmals in seiner eigenen ERP-Umgebung eingeben. Abgesehen davon, daß der Zeitaufwand, der mit einem Bestellvorgang verbunden ist, dadurch erhöht wird, besteht auch die Gefahr, daß der Besteller bei der manuellen Eingabe Fehler macht. Dies hat zur Folge, daß die für den B2C-Bereich entwickelten Systeme im B2B-Bereich nur geringe Akzeptanz finden.

Gerade kleinere Unternehmen haben es daher schwer, ihre für andere Unternehmen bestimmten Waren über das Internet abzusetzen. Zwar könnten sie auf die herkömmlichen B2B-Lösungen zurückgreifen, dies ist jedoch nur zwischen Unternehmen mit einem bestimmten Mindestauftragsvolumen wirtschaftlich. Die deutlich preisgünstigeren B2C-Systeme werden hingegen meist von den entsprechenden mit der Beschaffung von Waren befaßten Mitarbeitern aufgrund der damit verbundenen Mehrarbeit nicht benutzt.

In vielen Produktions- und Handelsuntemehmen nimmt jedoch in neuerer Zeit die elektronische Beschaffung deutlich an Bedeutung zu. Dies liegt daran, daß dadurch die Prozeßkosten erheblich gesenkt werden können, wobei gleichzeitig die Prozeßqualität und -geschwindigkeit deutlich erhöht werden. Ein einzelner manuell durchgeführter Bestellvorgang verursacht oftmals Kosten von mehreren Hundert Mark allein aufgrund der administrativen Tätigkeiten, wie beispielsweise das Beschaffen und Ausfüllen von Bestellformularen und die Lieferüberwachung, der manuellen Abstimmungsprozesse, wie z.B. die notwendige Anzahl von Unterschriften, die für die Genehmigung eines Bestellvorgangs notwendig sind, und der damit verbundenen Fehler, wie beispielsweise falsche oder unvollständige Artikelnummern, die den Liefervorgang stark verzögern können und unter Umständen aufwendige Folgeprozesse auslösen können. Dabei beträgt der Durchschnittspreis der bestellten Artikel oft nur 20-30 DM.

Es ist daher offensichtlich, daß ein Bedarf an einem kostengünstigen Verfahren und einem System zur Abwicklung von Geschäftsvorgängen besteht.

Aufgabe der Erfindung ist es daher, ein kostengünstiges Verfahren und ein System zur Abwicklung von Bestellvorgängen zwischen einem Anbieter und einem Besteller zur Verfügung zu stellen, welches einfach zu implementieren ist, und das sowohl im B2C-Bereich als auch im B2B-Bereich eingesetzt werden kann, wobei insbesondere im B2B-Bereich ein vereinfachter Datenaustausch möglich ist, durch den die manuelle Doppeleingabe der Bestelldaten vermieden werden kann.

Diese Aufgabe wird hinsichtlich des Verfahrens dadurch gelöst, daß die Bestelldaten erfaßt werden und von dem Besteller zu dem Anbieter übermittelt werden, eine Datei erzeugt wird, die Datenfelder enthält, die zumindest einen Teil der Bestelldaten repräsentieren, und diese Datei zu dem Besteller übermittelt wird.

Unter Bestelldaten werden beispielsweise Angaben über die Warenart, die Warenanzahl, den Warenpreis sowie die Zahlungs- und Lieferbedingungen verstanden.

Nach Abschluß des Bestellvorgangs bzw. nachdem die einzelnen Bestelldaten erfaßt worden sind, wird eine Datei erzeugt, die Datenfelder enthält, die zumindest die besonders relevanten Bestelldaten enthält. Diese Datei wird zu dem Besteller übermittelt. In der Datei sind beispielsweise die bestellte Warenart, die bestellte Warenmenge und der Preis eingetragen. Der Besteller muß nun diese Daten nicht noch einmal in sein eigenes Buchhaltungsprogramm eintragen, sondern kann die übermittelte Datei verwenden, um die entsprechenden Daten automatisch einzulesen.

Das Verfahren wird besonders bevorzugt in einem Netzwerk, wie z.B. dem Internet, angewendet. Die Datei ist vorzugsweise ein ASCII-File. Dabei steht ASCII für "American Standard Code for Information Interchange" (Amerikanische Standarddarstellung für den Austausch von Informationen). Mit Vorteil kommen Text-Dateien (TXT-Dateien) aber auch HTML-Dateien (Hypertext Mark-up Language) und XML-Dateien (Extensible Markup Language) zum Einsatz

Besonders bevorzugt wird die Datei mittels E-Mail zu dem Besteller übermittelt. Neben dem Übermittlungsverfahren E-Mail haben sich zwei weitere Verfahren etabliert:
1. Der Besteller kann sich die besagte Datei über einen Zugang (meist über Internet) zum Lieferantensystem selbst herunterladen.
2. Der Besteller kann die besagte Datei automatisch über einen elektronischen Versandprozeß (z.B. FTP) erhalten.

In beiden Verfahren kann der Besteller bestimmen, ob er die Bestelldaten in separaten Dateien (pro Bestellung eine Datei) oder zusammengefaßt in einer Datei bekommen möchte. In letzterem Fall kann der Besteller auswählen, von welchen Zeiträumen (z.B. letzte Woche) die Bestelldaten zusammengefaßt werden sollen.

Die Datei ist so strukturiert (mit Kopfdaten und Positionsdaten), daß Kundensysteme in der Lage sind, die Bestelldaten automatisch auszulesen und zu verarbeiten.

Um die Verarbeitung der übermittelten Datei auf seiten des Bestellers so einfach wie möglich zu gestalten, ist in einer besonders bevorzugten Ausführungsform des Verfahrens weiterhin vorgesehen, daß vor dem Erzeugen der Datei zunächst von dem Benutzer ein Teil der Bestelldaten bzw. ein Teil der Datenfelder ausgewählt wird, wobei dann eine Datei erzeugt wird, die zumindest den ausgewählten Teil der Bestelldaten enthält. Der Besteller kann somit selbst bestimmen, welche Daten ihm in der Datei übermittelt werden sollen, so daß nur diejenigen Datenfelder der Bestelldaten übermittelt werden müssen, die der Besteller in seinem eigenen Buchhaltungs- oder ERP-System verwenden kann und muß.

In einer weiteren besonders bevorzugten Ausführungsform ist vorgesehen, daß der Benutzer die Anordnung einzelner Datenfelder der Bestelldaten auswählen kann, wobei dann eine Datei erzeugt wird, in der die Datenfelder der Bestelldaten in der von dem Benutzer ausgewählten Anordnung abgelegt sind. Auch durch diese Maßnahme ist es möglich, daß der Benutzer die erzeugte Datei auf die Anforderungen seines eigenen Buchhaltungssystems anpaßt.

In einer weiteren besonders zweckmäßigen Ausführungsform des Verfahrens ist vorgesehen, daß der Besteller ein Dateiformat auswählt, wobei dann die Datei in dem von dem Besteller ausgewählten Format erzeugt wird. Neben den bereits erwähnten Text-, HTML- und XML-Formaten könnten beispielsweise auch Dateien in Datenbank-Formaten erzeugt werden. So ist es beispielsweise möglich, dem Besteller die Möglichkeit zu geben, zwischen verschiedenen Datenbanksystemen oder ERP-Systemen auszusuchen, wobei die Datei dann automatisch in den von dem entsprechenden Datenbanksystem oder ERP-System geforderten Format erzeugt wird.

Weiterhin kann es beispielsweise von Vorteil sein, wenn vorgesehen ist, daß der Besteller auch das Datenformat der einzelnen Datenfelder auswählen kann. So werden beispielsweise oftmals systemabhängig unterschiedliche Datumsformate, wie z.B. "15.03.2000" oder "2000-03-15", verwendet. Dadurch, daß der Besteller auswählen kann, in welchem Format ein Datum in das Datenfeld eingetragen werden soll, kann die Datei ohne weitere Konvertierung direkt von dem Buchhaltungs- oder ERP-System des Bestellers eingelesen und verarbeitet werden.

In einem besonders bevorzugten Verfahren ist vorgesehen, daß vor der Erzeugung der Datei eine Identifikation des Bestellers erfolgt. Dies kann beispielsweise durch Angabe einer Benutzer-lD und/oder eines Kennwortes erfolgen.

In einem weiteren besonders bevorzugten Verfahren ist vorgesehen, daß ein Bestellerprofil gespeichert wird, das dem Besteller bzw. entsprechenden Identifikationsdaten des Bestellers das von dem Besteller ausgewählte Datenformat und/oder die von dem Besteller ausgewählten Bestelldaten und/oder die von dem Besteller ausgewählte Anordnung der Datenfelder in der Datei zuordnet. Dies hat den Vorteil, daß der Besteller das von ihm gewünschte Dateiformat einschließlich der Anordnung und der Anzahl der Datenfelder nur einmal festlegen muß. Bei jeder neuen Bestellung erfolgt dann, sofern der Besteller das Bestellerprofil nicht ändert, die Erzeugung der Datei anhand der im Bestellerprofil abgelegten Daten.

Die erzeugte Datei kann prinzipiell in jedem beliebigen Format erzeugt werden. Besonders bevorzugt ist jedoch eine einfache Textdatei bzw. ein ASCII-File, da dieses Dateiformat von nahezu allen üblicherweise verwendeten Systemen verarbeitet werden kann. Eine weitere Möglichkeit ist es, die Datei in dem sogenannten XML-Format (Extensible Mark-up Language) zu erzeugen. Mit Hilfe dieser recht neuen Sprache können starre Datenstrukturen, wie sie in herkömmlichen Sprachen notwendig sind, überwunden werden.

In einem weiteren besonders bevorzugten Verfahren wird dem Besteller ebenfalls übermittelt, welches Format die erzeugte Datei hat und/oder welche Datenfelder in der erzeugten Datei enthalten sind und/oder in welcher Reihenfolge die einzelnen Datenfelder in der erzeugten Datei angeordnet sind. Der Besteller kann somit leicht überprüfen, ob die einzelnen Datenfelder in der von ihm gewünschten Anordnung sind. Zudem erleichtert eine solche Information die gegebenenfalls notwendige Anpassung des Buchhaltungssystems bzw. des ERP-Systems auf seiten des Bestellers. Diese Übermittlung kann beispielsweise durch Erzeugung und Übermittlung einer weiteren Datei, in der die entsprechenden Informationen eingetragen sind, erfolgen.

Hinsichtlich des Systems wird die eingangs erwähnte Aufgabe durch ein System zur Abwicklung von Bestellvorgängen mit einem Datenspeicher, einer Erfassungseinrichtung, die dafür vorgesehen ist, Bestelldaten von einem Besteller zu erfassen, einer Prozessoreinheit zur Ablage der erfaßten Bestelldaten in dem Datenspeicher gelöst, wobei erfindungsgemäß eine Einrichtung zur Erzeugung und Ausgabe einer Datei, die Datenfelder enthält, die zumindest die ausgewählten Bestelldaten repräsentieren, und eine Übermittlungseinrichtung für die Übermittlung der Datei zu dem Besteller vorgesehen sind.

Diese Übermittlungseinrichtung kann beispielsweise der E-Mail-Versand über das Internet sein. Selbstverständlich kann dem Besteller die Datei auch per Post auf einem nicht flüchtigen Datenträger zugesandt werden.

Die Erfassungseinrichtung kann beliebig ausgestaltet sein. So ist es beispielsweise möglich, daß der Besteller die entsprechenden Datenfelder der Bestelldaten über das Internet mittels seiner Tastatur in entsprechende Felder einer Eingabemaske einträgt. Alternativ dazu könnte auch vorgesehen sein, daß der Besteller zumindest einen Teil der Daten mittels eines Strichcodelesers, mit dem beispielsweise Strichcodes aus einem Bestellkatalog ausgelesen werden können, erfaßt.

Mit Vorteil kann auf die Erfassungseinrichtung über eine Datenleitung, wie z.B. ein Netzwerk, vorzugsweise ein Intranet oder das Internet, zugegriffen werden. Es ist daher nicht unbedingt erforderlich, daß der Besteller die Datenfelder beim Warenanbieter selbst erfaßt. Die erzeugte Datei ist vorzugsweise ein ASCII-File und wird dem Besteller per E-Mail übermittelt.

In einer besonders bevorzugten Ausführungsform des Systems ist weiterhin eine Auswahleinrichtung vorgesehen, mit der die Reihenfolge der Datenfelder der Bestelldaten in der Datei bestimmt werden kann. Dabei ist erfindungsgemäß vorgesehen, daß die Auswahleinrichtung für den Zugriff durch den Besteller ausgelegt ist. Des weiteren kann die Auswahleinrichtung mit Vorteil dafür vorgesehen sein, daß der Besteller bestimmen kann, welche Datenfelder der Bestelldaten in der Datei abgelegt werden sollen.

Mit Vorteil ist des weiteren eine Identifikationseinrichtung zur Identifizierung des Bestellers vorgesehen. Die Identifizierung kann beispielsweise durch Eingabe einer Identifikationsnummer oder eines Paßwortes, aber auch mit Hilfe einer elektronisch auslesbaren Kundenkarte, einer Einrichtung zur Erfassung eines Fingerabdruckes oder ähnlichem erfolgen.

Weitere Vorteile, Merkmale und Anwendungsmöglichkeiten werden deutlich anhand der folgenden Beschreibung einer bevorzugten Ausführungsform.

Ausgangspunkt für die vorliegende Erfindung ist ein typisches E-Commerce-Bestellsystem für das B2C-Umfeld. Dabei kann der Besteller über das Internet mit dem System des Lieferanten Kontakt aufnehmen. Das System des Lieferanten ist in der Regel direkt mit dem ERP-System (Enterprise Resource Planning System, wie z.B. SAP R/3) des Lieferanten verbunden. Der Besteller trägt in entsprechend zur Verfügung gestellte Datenfelder die Bestelldaten ein. Bestelldaten können beispielsweise Kundennummer, Kundenname, Lieferadresse, Produkte, Preise, Liefertermine usw. sein, die dann dem Kunden, der sich zuvor über seine Kundennummer und ein Paßwort identifiziert hat, angezeigt werden.

Der Besteller kann zusätzlich in einer Eingabemaske aus einer Liste von Daten Felder auswählen, die er für seine eigene Buchhaltung bzw. sein eigenes ERP-System benötigt. Beispiele für Datenfelder sind: Auftragsnummer, Bestelldatum, Kundenname, Kundennummer, Nummer der Kontaktperson, Name der Kontaktperson, Bestellzeichen, Währung, Sprache, Zahlungsbedingungen, aber auch warenbezogene Daten, wie z.B. Materialnummer, Materialbeschreibung, Materialnummer des Kunden, Bestellmenge, Verkaufseinheit, Preis pro Verkaufseinheit, Gesamtpreis mit/ohne Rabatt, Steuern, Bruttogewicht, Nettogewicht, Gewicht pro Einheit, Volumen, Volumen pro Einheit, EAN-Nummer (European Article Number), usw. Diese Daten werden in dem ERP-System des Herstellers abgelegt. Es ist daher nicht notwendig, daß der Besteller diese Vielzahl von Daten jedesmal eingeben muß. Vielmehr ordnet das erfindungsgemäße System dem Besteller, nachdem er sich identifiziert hat, sein letztmalig verwendetes Bestellerprofil zu. Nachdem der Besteller gegebenenfalls die Liste von Datenfeldern noch in der Reihenfolge sortiert hat, die für die Verarbeitung in dem Buchhaltungssystem oder ERP-System des Bestellers am günstigsten ist und gegebenenfalls ein bestimmtes gewünschtes Dateiformat angegeben worden ist, wird nach Abschluß des Bestellvorgangs in Abhängigkeit von dem gespeicherten Kundenprofil eine Datei erzeugt. Durch die Erstellung des Kundenprofils ist der Besteller in der Lage, das Format und den Inhalt der Datei derart zu bestimmen, daß die Datei direkt von dem ERP-System des Bestellers verarbeitet werden kann. Diese Datei wird dem Besteller beispielsweise als Anlage zu einer Auftragsbestätigung mittels E-Mail übermittelt.

Insbesondere dann, wenn die Datei als Text-File erzeugt worden ist, kann der Kunde bei Bedarf die Datei noch um weitere Datenfelder, wie beispielsweise eine bestimmte Kostenstelle des Bestellers oder eine bestimmte Projektnummer des Bestellers ergänzen. Die gegebenenfalls entsprechend ergänzte Datei kann dann mit den üblicherweise vorhandenen Upload-Programmen in das System des Bestellers eingespielt werden.

In der Anwendung des Verfahrens hat sich auch gezeigt, daß die bereitgestellten Dateien sich sehr gut eignen, um auf Kundenseite detaillierte Statistiken über das Kaufverhalten der Kundenorganisation zu erstellen. Eine Verarbeitung der Dateien auf Kundenseite z.B. mit PC-Programmen wie MS-Excel® ist einfach möglich.

Mit dem vorgeschlagenen Verfahren ist es möglich, ein speziell für das B2C-Gebiet entwickeltes System einfach und mit geringem finanziellem Aufwand derart abzuändern, daß eine einfache Verwendung auch im B2B-Umfeld möglich ist. Der Besteller muß die Bestelldaten lediglich einmal eintippen, so daß die Gefahr von manuellen Fehleingaben minimiert wird.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die vollständige Offenbarung aller vor- und nachstehend aufgeführten Anmeldungen, Patente und Veröffentlichungen, sowie der korrespondierenden Anmeldung DE 102 34 004.8, eingereicht am 25. Juli 2002, sind durch Bezugnahme in diese Anmeldung eingeführt.

## Patentansprüche

1. System zur Abwicklung von Bestellvorgängen mit einem Datenspeicher, einer Erfassungseinrichtung, die dafür vorgesehen ist, Bestelldaten von einem Besteller zu erfassen, einer Prozessoreinheit zur Ablage der erfaßten Bestelldaten in dem Datenspeicher, **dadurch gekennzeichnet, daß** eine Einrichtung zur Erzeugung und Ausgabe einer Datei, die Datenfelder enthält, die zumindest einen Teil der Bestelldaten repräsentieren, und eine Übermittlungseinrichtung für die Übermittlung der Datei zu dem Besteller vorgesehen ist.

2. System nach Anspruch 1, **dadurch gekennzeichnet, daß** die Erfassungseinrichtung eine Zugriffseinrichtung aufweist, auf die der Besteller über eine Datenleitung, wie z.B. ein Netzwerk, vorzugsweise ein Intranet oder das Internet, zugreifen kann.

3. System nach Anspruch 2, **dadurch gekennzeichnet, daß** vorgesehen ist, die Datei als E-Mail zu dem Besteller zu übermitteln.

4. System nach einem der Ansprüche 1 bis 3, **dadurch gekennzeichnet, daß** die Datei ein AS-Cll-File ist.

5. System nach einem der Ansprüche 1 bis 4, **dadurch gekennzeichnet, daß** eine Auswahleinrichtung vorgesehen ist, mit der ausgewählt werden kann, welche Bestelldaten in der Datei abgelegt werden.

6. System nach einem der Ansprüche 1 bis 5, **dadurch gekennzeichnet, daß** eine Auswahleinrichtung vorgesehen ist, mit der die Reihenfolge der Datenfelder der Bestelldaten in der Datei bestimmt werden kann.

7. System nach Anspruch 5 oder 6, **dadurch gekennzeichnet, daß** die Auswahleinrichtung für den Zugriff durch den Besteller ausgelegt ist.

8. System nach einem der Ansprüche 1 bis 7, **dadurch gekennzeichnet, daß** eine Identifikationseinrichtung zur Identifizierung des Bestellers vorgesehen ist.

9. System nach Anspruch 8, **dadurch gekennzeichnet, daß** eine Profilerfassungseinrichtung dafür vorgesehen ist, die von dem Besteller gewünschten Teile der Bestelldaten sowie die Reihenfolge der Bestelldaten in der Datei zu erfassen und die erfaßten Profildaten in dem Datenspeicher abzulegen, wobei die Profildaten vorzugsweise mit Identifikationsdaten verknüpft werden.

10. Verfahren zur Abwicklung von Bestellvorgängen zwischen einem Anbieter und einem Besteller, das die Schritte aufweist:
1) Erfassen von Bestelldaten, die aus einzelnen Datenfeldern bestehen, und Übermittlung von dem Besteller zu dem Anbieter,
2) Erzeugen einer Datei, die Datenfelder enthält, die zumindest einen Teil der Bestelldaten repräsentieren, und
3) Übermittlung der Datei zu dem Besteller.

11. Verfahren nach Anspruch 10, **dadurch gekennzeichnet, daß** die Bestelldaten über eine Vorrichtung zur Datenfernübertragung oder ein Netzwerk, vorzugsweise das Internet, übertragen werden.

12. Verfahren nach Anspruch 10 oder 11, **dadurch gekennzeichnet, daß** die Datei mit Hilfe von E-Mail zu dem Besteller übermittelt wird.

13. Verfahren nach einem der Ansprüche 10 bis 12, das weiterhin zwischen Schritt 1) und 2) den Schritt aufweist:
1a) Auswählen eines Teils der Bestelldaten durch den Besteller,
wobei in Schritt 2) eine Datei, die zumindest den ausgewählten Teil der Bestelldaten enthält, erzeugt wird.

14. Verfahren nach einem der Ansprüche 10 bis 13, das weiterhin zwischen Schritt 1) und 2) den Schritt aufweist:
1b) Auswählen der Anordnung einzelner Datenfelder der Bestelldaten durch den Benutzer,
wobei in Schritt 2) eine Datei, in der die Datenfelder der Bestelldaten in der von dem Benutzer ausgewählten Anordnung abgelegt sind, erzeugt wird.

15. Verfahren nach einem der Ansprüche 10 bis 14, das weiterhin zwischen Schritt 1) und 2) den Schritt aufweist:
1c) Auswählen eines Dateiformats durch den Besteller,
wobei in Schritt 2) die Datei in dem von dem Besteller ausgewählten Format erzeugt wird.

16. Verfahren nach einem der Ansprüche 10 bis 15, **dadurch gekennzeichnet, daß** vor Schritt 2) eine Identifikation des Bestellers erfolgt.

17. Verfahren nach einem der Ansprüche 10 bis 16, **dadurch gekennzeichnet, daß** der Schritt vorgesehen ist:
4) Speichern eines Bestellerprofils, das dem Besteller das von dem Besteller ausgewählte Datenformat und/oder die von dem Besteller ausgewählten Datenfelder der Bestelldaten und/oder die von dem Besteller ausgewählte Anordnung der Datenfelder in der Datei zuordnet.

18. Verfahren nach Anspruch 17, **dadurch gekennzeichnet, daß** in Schritt 2) in Abhängigkeit von dem Bestellerprofil eine Datei mit dem ausgewählten Datenformat und/oder mit den von dem Besteller ausgewählten Bestelldaten und/oder mit der von dem Besteller ausgewählten Anordnung der Datenfelder in der Datei erzeugt wird.

19. Verfahren nach einem der Ansprüche 10 bis 18, wobei dem Besteller übermittelt wird, welches Format die in Schritt 2) erzeugte Datei hat und/oder welche Datenfelder in der in Schritt 2) erzeugten Datei enthalten sind und/oder in welcher Reihenfolge die einzelnen Datenfelder in der in Schritt 2) erzeugten Datei angeordnet sind.
